# EUROPEAN PATENT SPECIFICATION

(11) **EP 0 761 277 B1**
(45) Date of publication and mention of the grant of the patent: **29.01.2003**
(21) Application number: 96305769.0
(22) Date of filing: 05.08.1996
(51) Int. Cl.: B01D 24/20, C02F 3/06

(54) **Submerged aerated filter**
Unter Wasser gesetzter, belüfteter Filter
Filtre immergé et aéré

(30) Priority: 17.08.1995 GB 9516847
(43) Date of publication of application: 12.03.1997
(73) Proprietor: TETRA EUROPE LIMITED, Nottingham NG6 0LJ (GB)
(72) Inventor: Whyley, John, Gedling, Nottingham NG4 4AD (GB)
(74) Representative: Kirkham, Nicholas Andrew

(56) References cited:
- DE-A- 3 305 238
- US-A- 3 853 752
- US-A- 4 923 606
- US-A- 5 006 251
- PATENT ABSTRACTS OF JAPAN vol. 016, no. 006 (C-0900), 9 January 1992 & JP-A-03 232585 (NGK INSULATORS LTD), 16 October 1991,

## Description

The present invention relates to submerged aerated filters, in particular but not exclusively to such filters where waste liquid and air are fed from the base of the filter.

The treatment of waste water and sewage has been developed continuously since medieval times. Since the advent of municiple sewage systems, sewage plants have been built for the treatment of such waste on regional basis. The early part of the 20th Century saw the advent of trickling filters. Untreated liquid is spread evenly onto the top of a bed of clinker, coke, broken stone, etc. As the liquid trickles through the bed oxidation of organic and nitrogenous material in the liquid occurs with the aid of bacteria, etc., which exists on the surfaces of the media of the bed using air trapped in pockets of the bed. Solid debris is thus formed which is separated from the liquid in settling tanks.

Many attempts have been made to increase the capacity of the filter for a given footprint, that is the area of ground, required by the filter. This is especially important in existing sewage plants which have to increase capacity to meet the demands of a growing population, etc., but cannot increase the area over which the plant extends. The filters have tended to become columns so that a greater filter volume is given by the height of the filter. The upward extent of the filter being limited to the weight which the base of the filter can support.

As the biological oxidation of the waste occurs on the surfaces of the filtering media, a larger amount of waste can be treated in a given volume of filter by increasing the surface area of the particles in the media. Thus, the average size of the media particles has been reduced in order to increase the surface area of the particles. Furthermore, the particles of the media are often formed from plastics material as this has been found to be particularly advantageous.

It has also been found that the efficiency of the filter is often increased by the filter media being flooded, i.e. the waste liquid surrounds about the media bed. Flow through the filter may be upwards or downwards. Air is pumped through the flooded filter media bed. Of course, it is vital to ensure that the air outlets do not become blocked, otherwise oxidation of the waste would cease. When used with small media (less than about 5 mm nominal diameter) solids are partially retained within the bed of medium and have to be removed by backwashing. Where solids are removed by backwashing, the filter is commonly known as a Biological Aerated Filter (BAF). In this case, a settlement tank following the unit is not normally required.

If larger media is used in the filter, solids may not be retained in the bed and are consequently removed by a settlement tank following the filter.

In this case where backwashing is not required, the filter is known as a Submerged Aerated Filter (SAF). This type of SAF differs from filter beds (trickling filters) because the plastics media bed is flooded and oxygen is forced into the system from the bottom. The advantages a SAF has over a biological filter bed are that it does not smell, there is no fly nuisance because it is flooded, it can be operated at much higher loading rates and it takes a much smaller ground area on site.

Existing submerged aerated filters use plastic media. Several differing types of plastic media have been used, including random fill types loosely filled into the packed bed which can comprise small hollow tubes or generally larger spider like formation of criss crossed cylindrical shapes. The more complex shapes provide the advantage of higher surface areas but in time this surface area can be reduced due to local blockaging. Another type of plastic media is the packed block type which is similar in nature to cooling tower media. This again provides high surface area but its disadvantage is that the process air can cause it to float in the submerged filter and recorded failures have been occasioned by this mechanism.

The present invention seeks to provide an improved submerged aerated filter which, for example, has a lower energy requirement and/or a greater handling capacity per unit of the footprint of the filter.

According to a first aspect of the present invention there is provide a submerged aerated filter comprising a filter vessel with a base, the base supporting a non-plastics particulate media column in the vessel, gas supply means and liquid supply means each being arranged to supply respectively gas and liquid to flow along the column, wherein the particulate media comprises particles having an average diameter of greater than 20 mm.

According to a second aspect of the present invention there is provided the use of non-plastics particulate media with an average particle diameter of greater than 10 mm, normally more than 20 mm, for producing a media column in a submerged aerated filter.

The present inventors have found that using a larger size of filter media actually improves the efficiency of the filter even though there is less surface area for biological action provided by the filter media. The present inventors believe that the improved efficiency is due to less blocking of the filter media occurring. Thus, reducing its effective surface area. Furthermore, due to the larger size of the particles making up the filter media, the flow passages through the filter are less prone to becoming blocked by solid debris. Consequently, the filter of the present invention requires less backwashing and hence uses no power than a B.A.F. plant. The present invention provides improved stability to submerged aerated filter packings.

Normally, the particles have an average diameter of greater than 20 mm, for example of between 27 mm and 40 mm, and it is preferred if the particulate media is stone or blast furnace slag. This allows the production cost of the filter to be reduced. Also, as the shape of the particles is not regular with these materials, this improves the flow characteristics through the filter and increases the surface area of the filter. When using the preferred media compositions, the base of the filter will normally be formed from concrete in order to support the weight of the media.

Preferably, the base described in US-A-4,923,606 is used in the filter.

The present invention will now be described with reference to the accompanying drawings, in which:
- Figure 1:: shows a submerged aerated filter according to the present invention;
- Figure 2:: shows three types of media support system for S.A.F. systems;
- Figure 3:: shows a further design of an upward flow B.A.F. system;

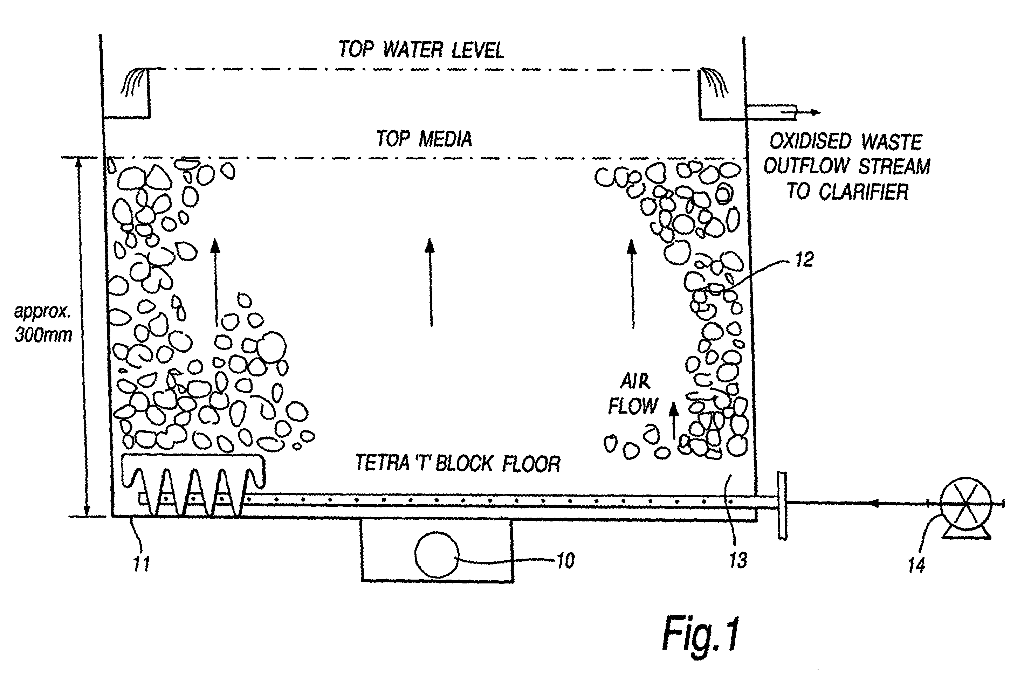

A submerged aerated filter according to the present invention is shown in Figure 1. The preferred embodiment of Figure 1 shows an upflow reactor.

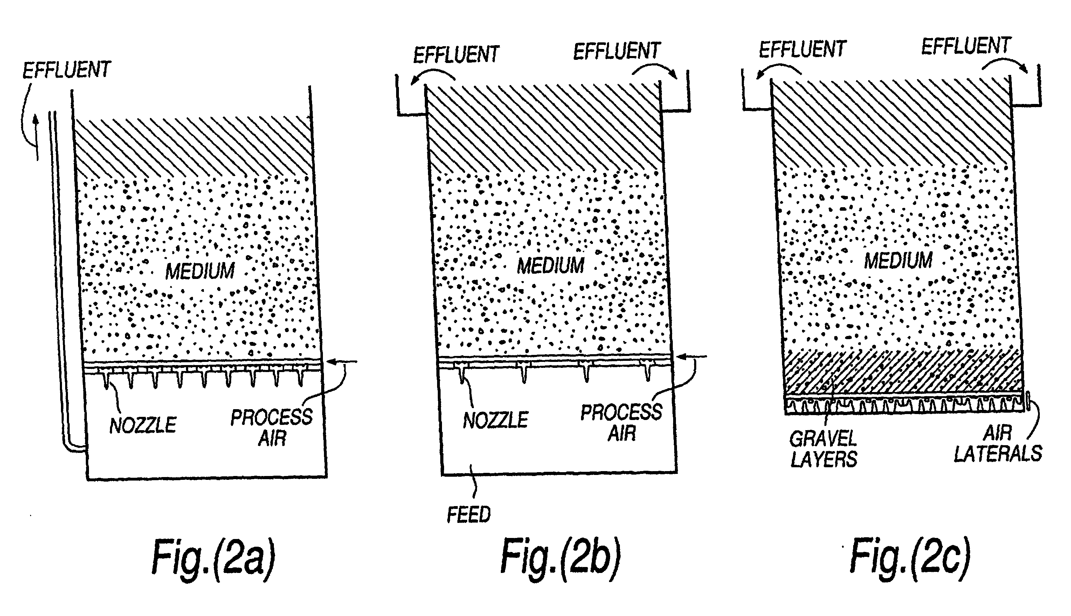

The filter comprises, a filter vessel 11. A base 13 supports media 12 in the vessel 11. The illustrated base is the aforementioned Tetra 'T' block floor described in greater detail in US-A-4,923,606. Other types of base could also be used, for example the base shown in Figure 2.

The filter media 12 comprises granular or particulate matter of greater than 20 mm in average diameter.

Preferably, the media 12 comprises blast furnace slag or stone, as this is an economical and readily available source.

An air supply system 14 pumps air into the base 12 from where it flows upwardly through the media 12.

Waste is input into the filter from the bottom of the vessel via waste feed 10. The waste also flows upwardly through the filter.

Normally, the media column is between 2 and 8 metres in height. Preferably, the column is approximately 3 to 4 metres in height.

As mentioned above, the present invention could also be used with a downflow reactor, but this is not generally preferred.

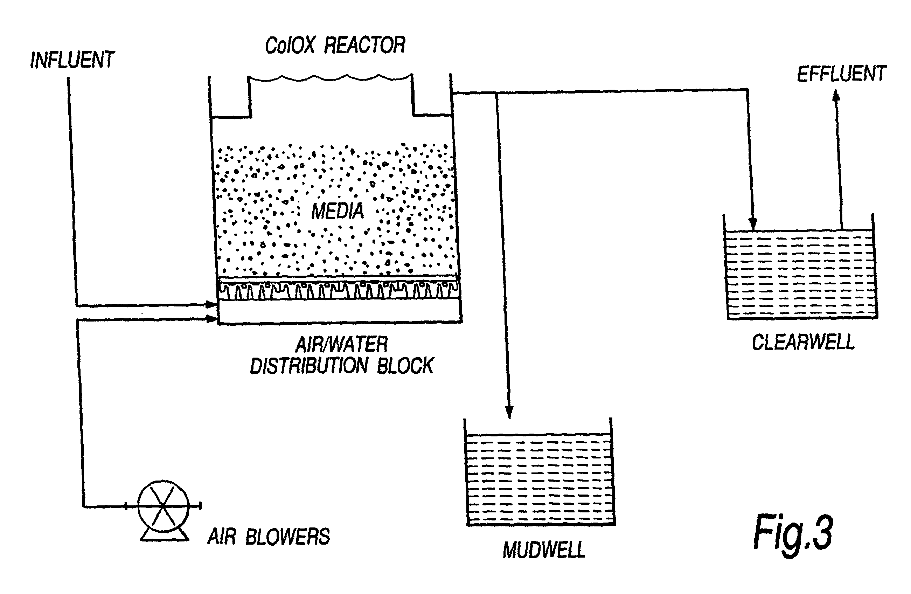

A submerged aerated filter (SAF) is similar to a biological filter but differs because it is totally flooded and it has forced oxidation (process air). Feed flow may be either upflow or downflow. It works in a similar way to a Biologically Aerated Filter (BAF) shown in Figure 3, but differs because it is designed not to retain solids. Because a Submerged Aerated Filter (SAF) sheds solids, it does not need to be backwashed but does need a settlement tank following after in order to capture these shed solids and separate the treated effluent. A process diagram of an upward flow SAF system is shown in Figure 1.

The system consists of the following:

| | |
|---|---|
| Feed of waste | (10) |
| A filter vessel | (11) |
| Filter medium | (12) |
| Filter medium support system | (13) |
| Process air system | (14) |

The filter vessel may be either of steel or concrete construction and either rectangular or circular (or other suitable shapes) depending upon the manufacturer. Medium is normally 2-8 m deep. The media used again depending upon supplier. The media may be either sand or expanded shale. In the present invention, it is preferred to use stone or blast furnace slag as previously described.

The filter medium support system is an important part of the whole system. Some types of system are illustrated in figure 2. As well as supporting the media and growth, the support must distribute evenly the process air and water, ie ensure an even application or removal of flow. Many systems use steel plates or concrete sub floors over a plenum chamber, flow to medium being via nozzles. Another system uses a steel mesh, again located over a plenum chamber. Failure of the filter bottom will result in loss of medium and the need to completely remove the filter for repair. Blockage or partial blockage of the filter bottom will result in a reduction of treatment efficiency.

The process air is often added from a header which may be located in the medium immediately above the filter bottom. Process air rates have to be sufficient to maintain aerobic conditions but not so high as to cause scouring of the accumulated biofilm.

Generally, loadings on SAF systems are considerably higher than are achievable by conventional biological filters, but are normally less than loadings on BAF plants. For example, BOD loadings required to achieve 90% nitrification from a normal settled sewage are:-

| | kg BOD/m³ |
|---|---|
| Bacteria beds | 0.06 to 0.09 |
| Activated sludge (1) | 0.1 to 0.2 |
| BAF (2) | 1 to 2.5 |
| SAF | 0.5 to 1.0 |

| | |
|---|---|
| (1) F:M ratio 0.1 to 0.12, MLSS 3,500 mg/l | |
| (2) Depends upon carbon/nitrogen ratio | |

Clearly, the volume of a SAF will need to be only one half to one fifth the volume of an activated sludge reactor.

This reduces the land area required. No return of mixed liquor is needed as on an aeration plant and this reduces power costs and complexity of installation and allows for simpler operation. The plant can be accommodated underground. There should be no odour or fly nuisance from properly designed units.

A SAP plant is much simpler in construction when compared to a BAF unit. Because there is no need to backwash a SAF the automatic valving and complex control arrangements associated with BAF plants are eliminated. This provides a capital cost advantage of SAF over BAF. Maintenance requirements should be minimal; feed and process blowers are all standard items. If fine bubble diffusers are used, then air cleaning may be required.

Sludge production from SAF's should be no higher than from an equivalent activated sludge plant. Co-settlement of the sludge seems to give no problems.

The system can be used either in upflow or downflow modes. A process diagram for upflow mode is shown in Figure 1.

Influent enters via a channel or pipes under the blocks and rises through gaps between the blocks. The media is located above the blocks and normally consists of 20-40 mm blast furnace slag. Because of robustness of the bottom design, it is possible to have very deep beds of medium 4-6 metres is usually used. To reduce pumping requirements, the reactors can be sunk into the ground. Process air is added from stainless steel laterals located under the blocks. There are no diffusers, nozzles or other orifices to block and cause problems.

Flow passes up through the media bed and is removed by high level weirs. Oxidised effluent together with shed solids is passed to a settlement tank for separation.

## Claims

1. A submerged aerated filter comprising a filter vessel with a base, the base supporting a non-plastics particulate media column in the vessel, gas supply means and liquid supply means each being arranged to supply respectively gas and liquid to flow along the column, wherein the non-plastics particulate media comprises particles having an average diameter of greater than 20 mm.

2. The filter according to claim 1, wherein the particles have an average diameter of between 27 mm and 40 mm.

3. The filter according to claim 1, wherein the particulate media comprise stone or blast furnace slag.

4. The filter according to any one of claims 1 to 3, wherein the gas supply means is arranged to supply air and/or the liquid supply means is arranged to supply impure water.

5. The filter according to any one of claims 1 to 4, wherein the base comprises a concrete or stone block which has channels extending therein through which channels the gas and/or liquid is fed.

6. The filter according to any one of the preceding claims, wherein the column extends more than 2 metres.

7. Use of a non-plastics particulate media with an average particle diameter of greater than 20 mm in a media column in a submerged aerated filter.

8. Use as claimed in claim 7, wherein the average particle diameter is greater than 30 mm, for example the average particle diameter is between 40 mm and 55 mm.

9. Use as claimed in claim 7 or claim 8, wherein the media is stone or blast furnace slag.

## Patentansprüche

1. Unter Wasser gesetzter, belüfteter Filter, der ein Filtergefäß mit einer Grundfläche, wobei die Grundfläche im Gefäß eine Säule mit aus einem nicht aus Kunststoff bestehenden, teilchenförmigen Medium trägt, Gaszufuhrmittel und Flüssigkeitszufuhrmittel umfasst, die jeweils so angeordnet sind, dass sie Gas bzw. Flüssigkeit so zuführen, dass es bzw. sie entlang der Säule strömt, worin das nicht aus Kunststoff bestehende, teilchenförmige Medium Teilchen mit einem mittleren Durchmesser von mehr als 20 mm umfasst.

2. Filter nach Anspruch 1, bei dem die Teilchen einen mittleren Durchmesser zwischen 27 mm und 40 mm aufweisen.

3. Filter nach Anspruch 1, bei dem das teilchenförmige Medium Stein oder Hochofenschlacke umfasst.

4. Filter nach einem der Ansprüche 1 bis 3, bei dem die Gaszufuhrmittel so angeordnet sind, dass sie Luft zuführen, und/oder die Flüssigkeitszufuhrmittel so angeordnet sind, dass sie unreines Wasser zuführen.

5. Filter nach einem der Ansprüche 1 bis 4, bei dem die Grundfläche einen Beton- oder Steinblock umfasst, der Kanäle aufweist, durch welche das Gas und/oder die Flüssigkeit zugeführt wird.

6. Filter nach einem der vorhergehenden Ansprüche, bei dem sich die Säule über mehr als 2 Meter erstreckt.

7. Verwendung eines nicht aus Kunststoff bestehenden, teilchenförmigen Mediums mit einem mittleren Teilchendurchmesser von mehr als 20 mm in einer Mediensäule in einem unter Wasser gesetzten, belüfteten Filter.

8. Verwendung nach Anspruch 7, bei der der mittlere Teilchendurchmesser größer als 30 mm ist, beispielsweise der mittlere Teilchendurchmesser zwischen 40 mm und 55 mm ist.

9. Verwendung nach Anspruch 7 oder Anspruch 8, bei der das Medium Stein oder Hochofenschlacke ist.

## Revendications

1. Filtre immergé et aéré comprenant un réservoir de filtre avec une base, la base supportant une colonne de matériau particulaire qui n'est pas du plastique dans le réservoir, des moyens d'alimentation en gaz et des moyens d'alimentation en liquide qui sont chacun agencés pour délivrer respectivement un écoulement de gaz et de liquide le long de la colonne, dans lequel le matériau particulaire qui n'est pas du plastique comprend des particules dont la granulométrie moyenne est supérieure à 20 mm.

2. Filtre selon la revendication 1, dans lequel la granulométrie moyenne des particules est comprise entre 27 mm et 40 mm.

3. Filtre selon la revendication 1, dans lequel le matériau particulaire comprend de la pierre ou du laitier de haut fourneau.

4. Filtre selon l'une quelconque des revendications 1 à 3, dans lequel les moyens d'alimentation en gaz sont agencés pour délivrer de l'air et/ou les moyens d'alimentation en liquide sont agencés pour délivrer de l'eau impure.

5. Filtre selon l'une quelconque des revendications 1 à 4, dans lequel la base comprend un bloc de béton ou de pierre qui présente des canaux s'étendant à l'intérieur du bloc, au travers desquels le gaz et/ou liquide est délivré.

6. Filtre selon l'une quelconque des revendications précédentes, dans lequel la colonne s'étend sur plus de 2 mètres.

7. Utilisation d'un matériau particulaire qui n'est pas du plastique présentant une granulométrie moyenne supérieure à 20 mm dans une colonne de matériau au sein d'un filtre immergé et aéré.

8. Utilisation selon la revendication 7, dans laquelle la granulométrie moyenne est supérieure à 30 mm, par exemple la granulométrie moyenne est comprise entre 40 mm et 55 mm.

9. Utilisation selon la revendication 7 ou 8, dans laquelle le matériau est de la pierre ou du laitier de haut fourneau.
